# DEMANDE DE BREVET EUROPEEN

(11) **EP 4 506 234 A1**
(43) Date de publication de la demande: **12.02.2025**
(21) Numéro de dépôt: 24187721.6
(22) Date de dépôt: 10.07.2024
(51) Int. Cl.: B62D 25/20, B60K 1/04

(54) **STRUCTURE DE VÉHICULE AUTOMOBILE AVEC PLANCHE À TALON**

(30) Priorité: 09.08.2023 FR 2308574
(71) Demandeur: Stellantis Auto SAS, 78300 Poissy (FR)
(72) Inventeur: BERTH, STEPHANE, 92320 CHATILLON (FR); GUILBAUT, MARC, 94140 ALFORTVILLE (FR); CASTREC, JOEL, 91290 ARPAJON (FR)
(74) Mandataire: BCIP

(57) **Abrégé**

L'invention a pour objet une structure (16) de soubassement (20) de véhicule automobile, notamment de véhicule électrique. La structure (16) comprenant deux longerons ; une zone de montage (44) de batterie électrique (12) entre les deux longerons ; un plancher supérieur (26), un plancher inférieur (24) ; une paroi verticale (32) s'étendant verticalement du plancher supérieur au plancher inférieur. La paroi verticale (32), également appelée planche à talon, comprend un rebord inférieur (34) avec une surface supérieure (48) et une surface inférieure (50) opposée à la surface supérieure. La surface inférieure (50) délimite la zone de montage et présente un relief de maintien (52) apte à maintenir une liaison de branchement (28), tel un tuyau de frein, sous le rebord inférieur.

## Description

L'invention traite du maintien de tuyaux de freinage dans une structure de véhicule automobile. L'invention se rapporte au domaine des structures de véhicule automobile adaptées pour recevoir des batteries dans le soubassement. L'invention a pour objet une structure de soubassement de véhicule automobile. L'invention a également pour objet un véhicule automobile.

De manière répandue, un véhicule automobile comprend un châssis soudé qui matérialise sa structure. La structure forme le soubassement dudit véhicule. Elle définit plusieurs compartiments, dont l'habitacle passager, un compartiment avant et un compartiment arrière de chargement. Au niveau de l'habitacle passager, le soubassement présente des longerons latéraux reliés par un plancher inférieur tandis que le compartiment arrière est délimité par une planche supérieure.

Un véhicule automobile à entraînement électrique, dit véhicule électrique, présente couramment une pluralité de batteries électriques d'entraînement placées sous le plancher, dans le soubassement. Cet ensemble de batteries est accueilli dans un élément protecteur inférieur, communément désigné en tant que bac batterie.

Ce bac masque l'ensemble des batteries, et les protège contre les projections de la route. Il apporte optionnellement une étanchéité vis-à-vis de l'environnement, et comporte communément un dispositif de refroidissement des batteries électriques afin d'en préserver les performances. Le bac est fixé à la caisse du véhicule par le dessous. A cet effet, il présente différents points de fixation répartis sur son étendue ; en particulier le long de ses bords latéraux.

Dans le soubassement, une planche à talon formant une paroi verticale est fixée au plancher supérieur et au plancher inférieur. En complément, le soubassement du véhicule automobile possède une partie inférieure formant une zone de montage des batteries qui est délimitée par le plancher inférieur.

La zone de montage citée précédemment permet de contenir une batterie ou un ensemble de batteries dont la capacité permet d'entraîner le véhicule. Chaque batterie est un dispositif électrochimique qui génère de l'électricité en convertissant de l'énergie chimique en énergie électrique. Les batteries électriques alimentent alors un ou plusieurs moteurs électriques d'entraînement qui actionnent les roues motrices.

Le document FR3120047A1 présente une structure de soubassement pour un véhicule automobile. La structure de soubassement comprend un plancher, et au moins deux longerons longitudinaux disposés respectivement de chaque côté du plancher. Le plancher est divisé en au moins une unité avant ; et une unité arrière fixée à une planche à talon transversale. Un bac de batterie de propulsion est fixé sous l'unité avant du plancher par des moyens de fixation comme, par exemple, des systèmes vis-écrous. Le bac de batterie de propulsion peut être associé à des moyens de support qui peuvent également lui assurer une protection en cas de choc latéral.

Dans le domaine automobile, les systèmes de freinage sont généralement réalisés à l'aide de disque de frein ou encore un tambour de frein. Le servofrein, à l'aide de l'impulsion de l'automobiliste, permet d'envoyer un flux de liquide à travers le système. L'impulsion est transmise par l'intermédiaire d'un tuyau de freinage véhiculant un fluide hydraulique pressurisé. Un tel tuyau de freinage doit contourner le bac batterie qui devient alors un obstacle physique. En outre, le bac ajoute une contrainte thermique car il s'échauffe en fonctionnement ; que ce soit en phase de décharge ou de recharge. Il est alors susceptible d'altérer le liquide de freinage contenu dans le tuyau de freinage.

L'invention a pour objectif de répondre à au moins un des problèmes ou inconvénients rencontrés dans l'art antérieur. En particulier, l'invention a pour objectif d'améliorer le maintien d'une liaison de branchement dans une structure de véhicule automobile présentant une zone de montage de batterie électrique. L'invention a également pour objectif d'optimiser la stabilité, la précision de positionnement, la facilité de montage d'une liaison de branchement et la masse d'une structure de véhicule automobile.

Selon un premier aspect, l'invention propose une structure de soubassement de véhicule automobile, la structure comprenant : deux longerons ; une zone de montage de batterie électrique entre les deux longerons ; un plancher supérieur ; un plancher inférieur ; une paroi verticale s'étendant verticalement du plancher supérieur au plancher inférieur, ladite paroi verticale comprenant un rebord inférieur avec une surface supérieure et une surface inférieure vers la zone de montage, et opposée à la surface supérieure ; **remarquable en ce que** la surface inférieure présente un relief de maintien apte à maintenir une liaison de branchement sous le rebord inférieur.

On aura bien compris que l'invention propose une planche à talon dont un rebord inférieur présente une irrégularité de blocage afin de caler une liaison de branchement contre le contenant de la batterie.

La discontinuité formée par le relief de maintien permet de maintenir et de positionner la liaison de branchement ; par exemple en la bloquant contre le bac à batterie du véhicule automobile. Cette discontinuité est directement formée dans le rebord de la paroi verticale, ce qui permet de rationaliser le nombre de pièces de la structure ; et donc d'optimiser sa fabrication. L'invention s'insère dans l'interface entre la batterie et le plancher de l'habitacle, ce qui participe à la compacité.

Le document CN214985679U présente une structure d'un véhicule électrique. Une pièce réalisée en pliage comporte deux arcs de cercle dans lequel se place une conduite de frein. Cette pièce est fixée par sa base sur la structure de la voiture, plus particulièrement à la poutre inférieure du véhicule automobile. Cette architecture permet un maintien des conduites par la pression exercée avec le système de vis écrou. Or ce document n'apporte aucune solution de maintien de tuyau de frein ou de toute liaison de branchement passant entre une planche à talon et une batterie électrique d'entraînement logée dans le soubassement.

Préférentiellement, le relief de maintien comprend un creux de maintien formé par la surface inférieure.

Préférentiellement, la surface supérieure comprend un bossage au niveau du relief de maintien.

Préférentiellement, le relief de maintien comprend un allongement principal orienté transversalement.

Préférentiellement, le relief de maintien comprend un tronçon profilé suivant l'allongement principal.

Préférentiellement, le relief de maintien est un premier relief de maintien, et la surface inférieure présente un deuxième relief de maintien de liaison de branchement sous le rebord inférieur ; le deuxième relief de maintien étant longitudinalement au niveau du premier relief de maintien.

Préférentiellement, le rebord inférieur présente un tronçon latéral et un tronçon central ; le tronçon latéral étant sous le tronçon central ; le relief de maintien étant agencé dans le tronçon latéral.

Préférentiellement, le rebord inférieur est fixé au plancher inférieur.

Préférentiellement, le rebord inférieur est un rebord horizontal et/ou un rebord avant.

Selon un autre aspect, l'invention propose un ensemble pour véhicule automobile, ledit ensemble comprenant une structure avec deux longerons, un plancher supérieur, un plancher inférieur, une paroi verticale s'étendant verticalement du plancher supérieur au plancher inférieur, ladite paroi verticale comprenant un rebord avec une surface supérieure et une surface inférieure opposée à la surface supérieure ; un bac pour une batterie électrique entre les deux longerons et sous le plancher inférieur ; remarquable en ce que la surface inférieure délimite la zone de montage et présente une discontinuité de maintien, l'ensemble comprenant en outre une liaison de branchement maintenue entre la discontinuité de maintien et le bac.

Préférentiellement, la discontinuité de maintien est un relief de maintien telle une découpe de maintien.

Préférentiellement, la structure comprend un plancher d'habitacle, le bac étant sous le plancher d'habitacle.

Selon un autre aspect, l'invention propose un véhicule automobile comprenant une structure, remarquable en ce que la structure est conforme à l'invention ; et en ce que le véhicule automobile comprend en outre un moteur d'entraînement du véhicule automobile, un bac, une batterie électrique apte à alimenter le moteur d'entraînement et agencée dans le bac, et une liaison de branchement en contact du bac et du relief de maintien.

Préférentiellement, le véhicule automobile comprend un système de freinage avec une conduite hydraulique formant la liaison de branchement, ladite conduite hydraulique étant maintenue par le relief de maintien.

Préférentiellement, la liaison de branchement comprend successivement un tronçon longitudinal s'étendant en avant du relief de maintien, un tronçon coudé, et un tronçon transversal maintenu par le relief de maintien.

Préférentiellement, le bac comprend des moyens de fixation du tronçon longitudinal.

Préférentiellement, le véhicule automobile comprend un corps de maintien entourant la liaison de branchement ; le corps de maintien étant maintenu par le relief de maintien.

Préférentiellement, la paroi verticale comprend un matériau métallique et le corps de maintien comprend un matériau plastique.

Préférentiellement, le relief de maintien comprend une première largeur transversale, le corps de maintien comprend une deuxième largeur transversale inférieure à la première largeur transversale.

Préférentiellement, les deux longerons sont des longerons centraux.

Préférentiellement, la liaison de branchement comprend un tuyau.

Préférentiellement, la liaison de branchement est une liaison de freinage.

Préférentiellement, le véhicule automobile comprend un espace de chargement arrière le long du plancher supérieur.

Préférentiellement, le tronçon longitudinal est un tronçon droit.

Préférentiellement, le relief de maintien comprend une première longueur longitudinale, le corps de maintien comprend une deuxième longueur longitudinale inférieure à la première longueur longitudinale.

Selon un autre aspect, l'invention propose un véhicule automobile comprenant un ensemble, remarquable en ce que l'ensemble est conforme à l'invention.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.

La figure 1 est une vue de profil d'un véhicule automobile selon l'invention.

La figure 2 montre une portion de structure de soubassement de véhicule automobile selon l'invention.

La figure 3 est un agrandissement de la figure 2 au niveau de la paroi verticale de structure de véhicule automobile selon l'invention.

La figure 4 est une coupe de la structure de soubassement de véhicule automobile selon l'invention.

Dans la description qui suit, le terme « comprendre » est synonyme de « inclure » et n'est pas limitatif en ce qu'il autorise la présence d'autres éléments dans le véhicule automobile ou la structure auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule automobile. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage de la structure, à moins que le contraire ne soit mentionné explicitement.

Au travers de la description, les différentes figures utilisent les mêmes signes de référence pour désigner des entités identiques ou similaires.

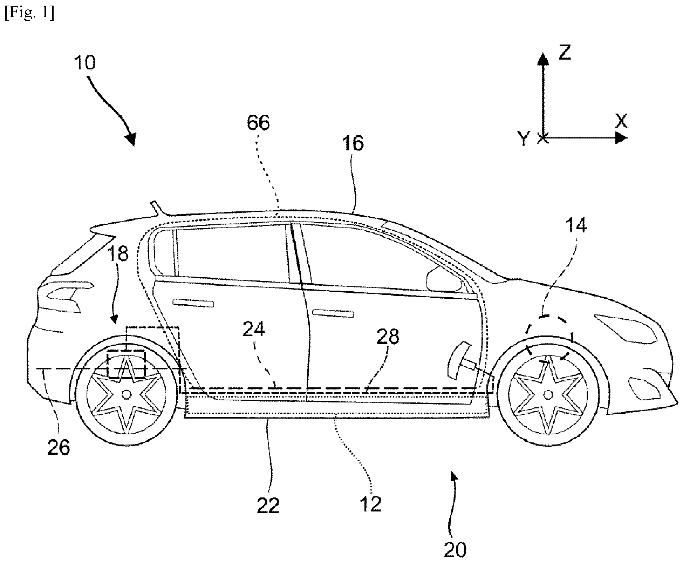

La figure 1 représente un véhicule automobile 10 selon l'invention. Le véhicule automobile 10 comprend des moyens de stockage d'énergie, telle une batterie électrique 12 ; et au moins un moteur, tel un moteur d'entraînement 14, adaptés pour entraîner ledit véhicule automobile 10. La batterie électrique 12 est configurée pour alimenter le moteur d'entraînement 14 afin de propulser le véhicule automobile 10.

Le véhicule automobile 10 comprend une structure 16. La structure 16 forme une caisse extérieure, ou encore une ossature principale du véhicule automobile 10. La structure 16 délimite différents compartiments du véhicule automobile 10, dont l'habitacle passager 66, le coffre de chargement, le compartiment moteur (non représentés). La structure 16 peut être formée d'un assemblage de tôles embouties et soudées ensemble.

La structure 16 relie différentes parties du véhicule automobile 10 dont les ouvrants. La structure 16 forme un support de montage pour le groupe motopropulseur, les systèmes de suspension, le système de direction, les systèmes de freinage 18. Les systèmes de freinage 18 relient chaque roue, et sont actionnés par l'utilisateur.

La structure 16 présente un soubassement 20. Le soubassement 20 forme la partie inférieure de la structure 16. Le soubassement 20 est en regard du sol. Il est sous l'habitacle passager 66. Le soubassement 20 comprend plusieurs longerons 22, en l'occurrence deux longerons 22 (un seul visible). Les longerons 22 sont des longerons centraux, en position centrale entre les roues. Ils s'étendent le long de l'habitacle passager 66. Les longerons 22 sont des longerons principaux.

La structure 16 présente en outre un plancher inférieur 24. Le plancher inférieur 24 délimite notamment l'habitacle passager 66. Il est horizontal, et s'étend le long des longerons 22. Le plancher inférieur 24 est au-dessus de la batterie électrique 12, et notamment du bac qui accueille cette dernière. La structure 16 comporte par ailleurs un plancher supérieur 26. Le plancher supérieur 26 est en élévation par rapport au plancher inférieur 24, par exemple d'au moins 5 cm, préférentiellement d'au moins 15 cm. Il peut délimiter un compartiment arrière, telle coffre arrière. Le plancher supérieur 26 peut s'étendre partiellement au niveau de l'habitacle passager 66. Des sièges arrière peuvent être fixé au plancher supérieur 26.

Le véhicule automobile 10 comprend par ailleurs une liaison de branchement 28. La liaison de branchement 28 est par exemple une conduite hydraulique, telle un tuyau de frein. Elle relie un actionneur de freinage, telle une pédale de frein ; à un dispositif de freinage, tel un étrier de frein coopérant par friction avec un disque de frein couplé à une roue. En l'occurrence, la liaison de branchement 28 est connectée à l'une des roues arrière. La liaison de branchement 28 est agencée entre le plancher inférieur 24 et la batterie électrique 12.

Selon une alternative de l'invention, la liaison de branchement comprend un câble électrique. Le câble électrique peut être un câble d'actionnement d'un système de freinage électrique, ou d'un autre type d'actionneur du véhicule automobile. La liaison de branchement peut être un tuyau de refroidissement.

Le véhicule automobile peut par exemple être un véhicule automobile particulier ou un véhicule automobile utilitaire.

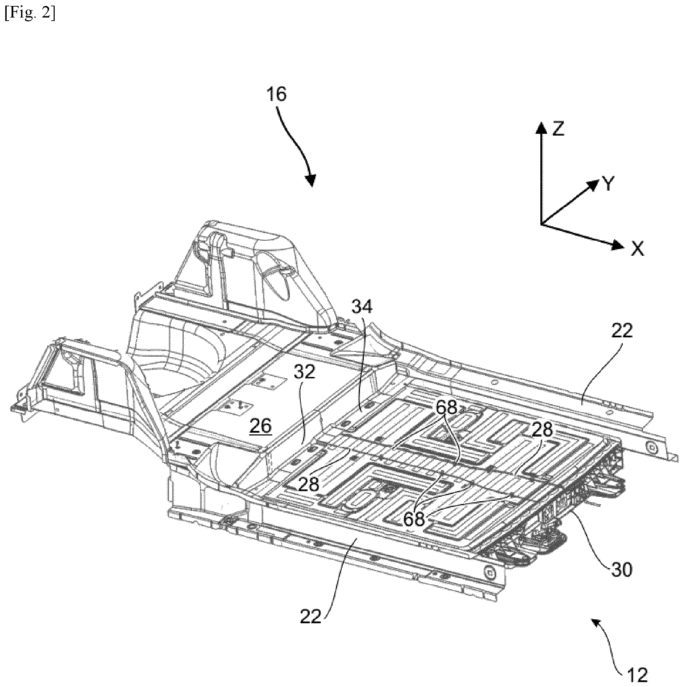

La figure 2 présente une structure 16 de véhicule automobile. Le véhicule automobile correspond à celui présenté en relation avec la figure 1. La plancher inférieur n'est pas représenté par soucis de clarté.

La batterie électrique 12 est logée dans un bac 30. Le bac 30 forme un couvercle de protection inférieur. Il forme un boîtier, préférentiellement étanche. Le bac 30 est bordé transversalement par les longerons 22. Il peut y être fixé. Le bac 30 s'étend au moins sur la moitié de la largeur de la structure 16.

La structure 16 comprend une paroi verticale 32. La paroi verticale 32 s'étend transversalement et relie les longerons 22. La paroi verticale 32 s'étendant verticalement, du plancher supérieur 26 au plancher inférieur. Elle les relie. La paroi verticale 32 comprend un rebord inférieur 34 avec une surface supérieure et une surface inférieure verticalement opposée à la surface supérieure. Le rebord inférieur 34 est généralement horizontal. Le plancher inférieur est fixé au rebord inférieur 34, par exemple au-dessus. Le rebord inférieur 34 s'étend transversalement. Il rigidifie la paroi verticale 32. La paroi verticale 32 présente une hauteur d'au moins 10 cm, préférentiellement d'au moins 15 cm.

Le véhicule automobile comprend au moins une liaison de branchement 28, en l'occurrence deux liaisons de branchement 28. Les liaisons de branchement 28 s'étendent longitudinalement. Elles s'étendent tout le long de la batterie électrique 12, et notamment du bac 30. Les liaisons de branchement 28 se prolongent transversalement sous le rebord inférieur 34. A cet endroit, elles bifurquent transversalement, par exemple pour relier les roues. Elles sont verticalement entre le rebord inférieur 34 et la batterie électrique 12.

Afin d'améliorer leur maintien, les liaisons de branchement 28 présentent des moyens de fixation 68. Les moyens de fixation 68 comprennent des pinces de fixation, par exemple solidaires du bac 30. Les moyens de fixation 68 sont répartis de long de leur tracé. Les moyens de fixation 68 peuvent comprendre des moyens élastiques. Les pinces de fixation entourent les liaisons de branchement 28.

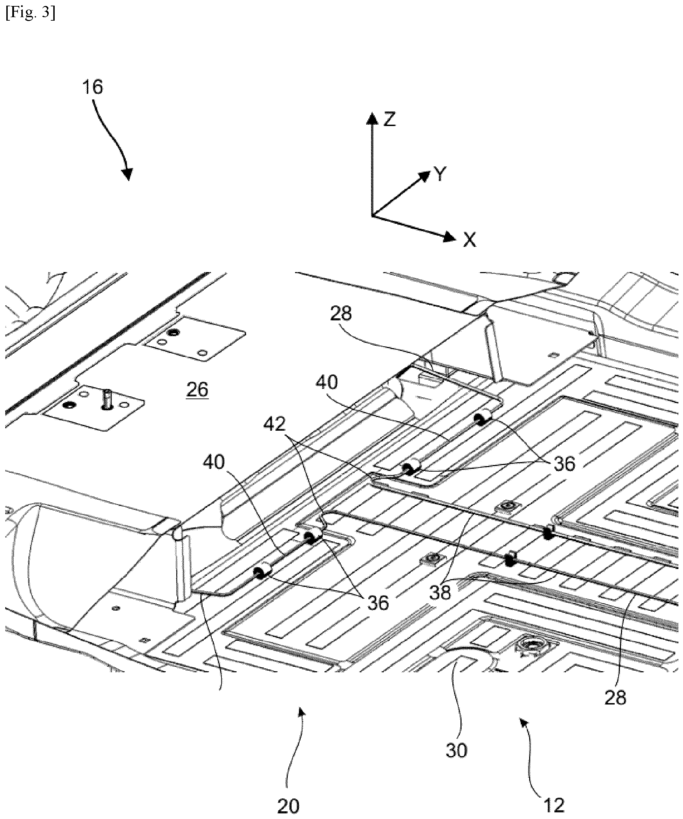

La figure 3 présente une portion de structure 16 de soubassement 20 de véhicule automobile. Le véhicule automobile correspond à celui présenté en relation avec l'une des figures 1 à 2. La paroi verticale n'est pas représentée par soucis de clarté.

Les deux liaisons de branchement 28 se prolongent au-dessus de la batterie 12 face au bac 30, puis sous le plancher supérieur 26. Les liaisons de branchement 28 sont équipées de corps de maintien 36. Les corps de maintien 36 sont cylindriques et coopèrent avec des surfaces de maintien correspondantes. Les corps de maintien 36 peuvent comprendre des moyens élastiques. Ils peuvent comprendre un matériau élastomère. Les corps de maintien 36 sont longitudinalement à distance du plancher supérieur 26. Ils forment une rangée transversale. Les deuxièmes corps de maintien sont en appui contre le bac 30 de la batterie électrique 12.

Au moins une ou chaque liaison de branchement 28 comprend au moins un tronçon longitudinal 38 et un tronçon transversal 40. Le tronçon transversal 40 s'étend vers une roue associée. Le tronçon longitudinal 38 et le tronçon transversal 40 sont reliés par un tronçon coudé 42. Chaque tronçon coudé 42 apporte de la souplesse à la liaison de branchement 28 correspondante. Il peut comprendre un lacet allongeant la liaison de branchement 28. Cet aspect amenuise les contraintes mécaniques liées à la dilatation. Il intervient également lors des variations de pression qui déforment la liaison de branchement 28. Chaque tronçon longitudinal 38 est maintenu contre le bac par les moyens de fixation.

Les corps de maintien 36 sont longitudinalement au niveau de la paroi verticale, notamment du rebord inférieur. Les corps de maintien 36 sont agencés le long des tronçons transversaux 40. Ces derniers sont encore prolongés par des antennes de connections dirigées vers l'arrière ; par exemple vers les roues et les modules de freinage.

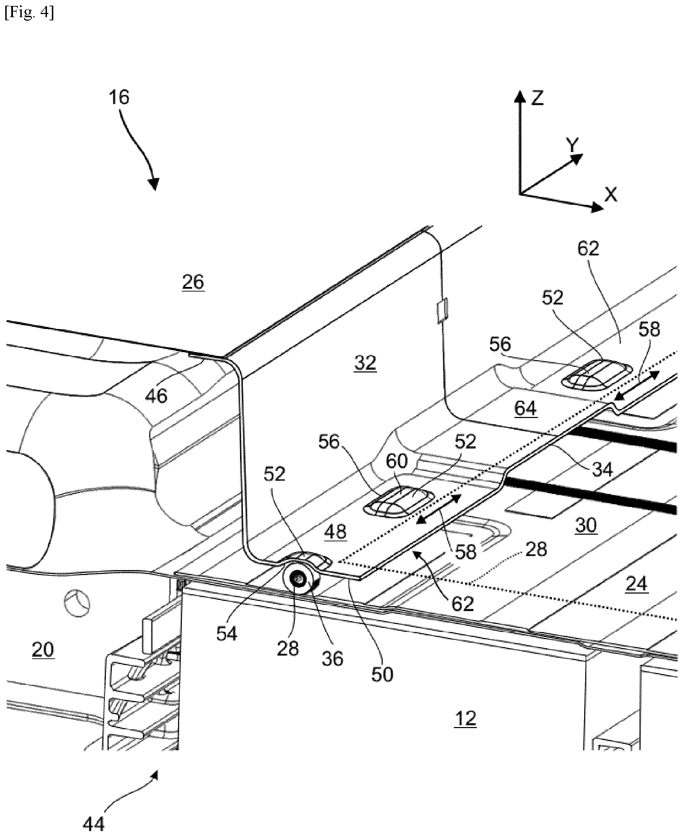

La figure 4 présente une coupe de structure 16 de soubassement 20 de véhicule automobile. Le véhicule automobile correspond à celui présenté en relation avec l'une des figures 1 à 3. Le plancher inférieur 24 est représenté en pointillés.

La structure 16 présente une zone de montage 44 pour la batterie électrique 12. La zone de montage 44 est dans le soubassement 20. La zone de montage 44 s'étend entre les deux longerons (non représentés) et des traverses. La surface supérieure du soubassement 20 est formée par le plancher supérieur 26 et le plancher inférieur 24 qui sont j oints par une paroi verticale 32. En particulier, la paroi verticale 32 comporte un rebord inférieur 34 et un rebord supérieur 46. Les rebords s'étendent longitudinalement dans des directions opposées. La paroi verticale 32 comprend une épaisseur supérieure à l'épaisseur du plancher inférieur 24 et/ou à l'épaisseur du plancher supérieur 26. Cela optimise la rigidité et le maintien de la liaison de branchement 28.

La paroi verticale 32 comprend une plaque verticale dont les extrémités supérieures et inférieures sont respectivement prolongées par le rebord supérieur 46 et le rebord inférieur 34. La paroi verticale 32 est monobloc. Elle comprend avantageusement une tôle métallique, préférentiellement en acier ou alternativement en alliage d'aluminium. Elle est mise en forme par emboutissage.

Alternativement, la paroi verticale comprend une feuille en matériau composite à matrice plastique chargée en fibres.

Le rebord inférieur 34 présente une surface supérieure 48 et une surface inférieure 50 opposée à la surface supérieure 48. La surface inférieure 50 délimite la zone de montage 44. Afin de bloquer la liaison de branchement 28, la surface inférieure 50 présente au moins un relief de maintien 52, préférentiellement une pluralité de reliefs de maintien 52. De manière générale, chaque relief de maintien 52 est une discontinuité de maintien.

Chaque relief de maintien 52 est apte à maintenir l'une des liaisons de branchement 28 sous le rebord inférieur 34. Les reliefs de maintien 52 sont répartis le long des liaisons de branchement 28, en l'occurrence le long des tronçons transversaux (non visibles). Les reliefs de maintien 52 forment un alignement transversal. Ils sont longitudinalement au même niveau. Ils sont également verticalement au même niveau.

La suite de la description se concentrera sur l'un des reliefs de maintien 52. Toutefois, les caractéristiques qui suivent s'appliquent à chaque relief de maintien 52. Le relief de maintien 52 comprend un creux de maintien 54 formé dans la surface inférieure 50. Le creux de maintien 54 forme une cavité. Il est concave. Il est ouvert vers le bas. Le corps de maintien 36 s'étend verticalement dans le creux de maintien 54. Le corps de maintien 36 est partiellement logé dans le creux de maintien 54. En face opposée, le rebord inférieur 34 présente un bossage 56 au niveau du relief de maintien 52. Le bossage 56 forme une protrusion vers le haut. Le corps de maintien 36 peut être en matériau souple. Il peut comprendre un matériau en mousse, ou en élastomère ; ce qui apporte un amorti de vibrations. Il peut être sensiblement comprimé contre le bac 30 afin d'améliorer la stabilité de maintien.

Le relief de maintien 52 comprend un allongement principal 58 orienté transversalement. L'allongement principal 58 correspond à la dimension la plus grande du relief de maintien 52. Le relief de maintien 52 comprend un tronçon profilé 60 suivant l'allongement principal 58. Le tronçon profilé 60 est généré selon un même profil sur toute sa longueur transversale. La présence du tronçon profilé 60 améliore le maintien de la liaison de branchement 28, et notamment de la forme cylindrique du corps de maintien 36.

Le relief de maintien 52 comprend une première largeur transversale. La première largeur transversale est mesurée selon l'allongement principal 58. La première largeur transversale est une largeur moyenne. Le corps de maintien 36 qui y est associé comprend une deuxième largeur transversale. La deuxième largeur transversale est mesurée le long de la liaison de branchement 28 qui traverse ledit corps de maintien 36. Elle est inférieure à la première largeur transversale, par exemple d'au moins 10%, ce qui autorise un ajustement transversal du corps de maintien 36 ; et donc facilite le montage de la liaison de branchement 28.

Le rebord inférieur 34 présente un tronçon latéral 62 et un tronçon central 64, préférentiellement un tronçon latéral de chaque côté du tronçon central 64. Chaque tronçon latéral 62 est sous le tronçon central 64. Le tronçon central 64 est verticalement à distance de chaque tronçon latéral 62. Chaque relief de maintien 52 est agencé dans les tronçons latéraux 62. L'écartement du tronçon central 64 ménage un dégagement pour le passage des liaisons de branchement 28.

Selon une alternative de l'invention, chaque relief de maintien comprend une protrusion faisant saillie sous la surface inférieure. La protrusion positionne longitudinalement la liaison de branchement associée. La protrusion comprend une surface de positionnement ; par exemple directement en contact de la liaison de branchement.

Selon une alternative de l'invention, chaque relief de maintien comprend une paire de protrusions. Ces protrusions sont décalées longitudinalement et bordent la liaison de branchement afin de l'immobiliser et/ou de la positionner.

Selon une alternative de l'invention, chaque relief de maintien comprend une découpe de maintien. Par exemple, la découpe de maintien forme un ajour de maintien dans lequel entre un corps de maintien afin de s'y indexer en position. La surface de maintien est par exemple plane autour de l'ajour de maintien.

L'invention comprend la combinaison de tous les modes de réalisation présentés par toutes les figures.

Les figures 2 à 4 sont des vues isométriques. Elles respectent chacune une échelle spécifique, des angles réels et des proportions réelles.

## Revendications

1. Structure (16) de soubassement (20) de véhicule automobile (10), la structure (16) comprenant : deux longerons (22) ; une zone de montage (44) de batterie électrique (12) entre les deux longerons (22) ; un plancher supérieur (26) ; un plancher inférieur (24) ; une paroi verticale (32) s'étendant verticalement du plancher supérieur (26) au plancher inférieur (24), ladite paroi verticale (32) comprenant un rebord inférieur (34) avec une surface supérieure (48) et une surface inférieure (50) vers la zone de montage (44), et opposée à la surface supérieure (48) ; **caractérisée en ce que** la surface inférieure (50) présente un relief de maintien (52) apte à maintenir une liaison de branchement (28) sous le rebord inférieur (34).

2. Structure (16) selon la revendication 1, **caractérisée en ce que** le relief de maintien (52) comprend un creux de maintien (54) formé par la surface inférieure (50) ; préférentiellement la surface supérieure (48) comprend un bossage (56) au niveau du relief de maintien (52).

3. Structure (16) selon l'une des revendications 1 à 2, **caractérisée en ce que** le relief de maintien (52) comprend un allongement principal (58) orienté transversalement ; préférentiellement, le relief de maintien (52) comprend un tronçon profilé (60) suivant l'allongement principal (58).

4. Structure (16) selon l'une des revendications 1 à 3, **caractérisée en ce que** le rebord inférieur (34) présente un tronçon latéral (62) et un tronçon central (64) ; le tronçon latéral (62) étant sous le tronçon central (64) ; le relief de maintien (52) étant agencé dans le tronçon latéral (62).

5. Structure (16) selon l'une des revendications 1 à 4, **caractérisée en ce que** le relief de maintien (52) est un premier relief de maintien, et la surface inférieure (50) présente un deuxième relief de maintien de liaison de branchement (28) sous le rebord inférieur (34) ; le deuxième relief de maintien étant longitudinalement au niveau du premier relief de maintien.

6. Véhicule automobile (10) comprenant une structure (16), **caractérisé en ce que** la structure (16) est conforme à l'une des revendications 1 à 4 ; et **en ce que** le véhicule automobile (10) comprend en outre un moteur d'entraînement (14) du véhicule automobile (10), un bac (30), une batterie électrique (12) apte à alimenter le moteur d'entraînement (14) et agencée dans le bac (30), et une liaison de branchement (28) en contact du bac (30) et du relief de maintien (52).

7. Véhicule automobile (10) selon la revendication 6, **caractérisé en ce que** le véhicule automobile (10) comprend un système de freinage (18) avec une conduite hydraulique formant la liaison de branchement (28), ladite conduite hydraulique étant maintenue par le relief de maintien (52).

8. Véhicule automobile (10) selon l'une des revendications 6 à 7, **caractérisé en ce que** la liaison de branchement (28) comprend successivement un tronçon longitudinal (38) s'étendant en avant du relief de maintien (52), un tronçon coudé (42), et un tronçon transversal (40) maintenu par le relief de maintien (52) ; préférentiellement, le bac (30) comprend des moyens de fixation (68) du tronçon longitudinal (38).

9. Véhicule automobile (10) selon l'une des revendications 6 à 8, **caractérisé en ce que** le véhicule automobile (10) comprend un corps de maintien (36) entourant la liaison de branchement (28) ; le corps de maintien (36) étant maintenu par le relief de maintien (52) ; préférentiellement la paroi verticale (32) comprend un matériau métallique et le corps de maintien (36) comprend un matériau plastique.

10. Véhicule automobile (10) selon la revendication 9, **caractérisé en ce que** le relief de maintien (52) comprend une première largeur transversale, le corps de maintien (36) comprend une deuxième largeur transversale inférieure à la première largeur transversale.
